# DEMANDE DE BREVET EUROPEEN

(11) **EP 2 228 592 A1**
(43) Date de publication de la demande: **15.09.2010**
(21) Numéro de dépôt: 10155700.7
(22) Date de dépôt: 05.03.2010
(51) Int. Cl.: F21S 8/10, F21S 8/12, G02B 6/00, F21Y 101/02

(54) **Dispositif optique, notamment pour véhicule automobile, tel qu'un dispositif d'éclairage ou de signalisation**

(30) Priorité: 12.03.2009 FR 0901154
(71) Demandeur: VALEO VISION, 93012 Bobigny (FR)
(72) Inventeur: De Lamberterie, Antoine, 75019, PARIS (FR)

(57) **Abrégé**

L'invention concerne un dispositif optique, notamment pour véhicule automobile, tel qu'un dispositif d'éclairage ou de signalisation, ce dispositif comportant au moins un guide de lumière (3) agencé pour guider au moins une partie de la lumière émise par une source lumineuse, le guide de lumière comportant au moins une face de sortie et au moins une face de réflexion principale agencée pour réfléchir, vers la face de sortie, de la lumière se propageant dans le guide, le guide de lumière comportant une portion de couplage (20) avec la source lumineuse, cette portion de couplage présentant un axe transversal (Y), le dispositif étant caractérisé par le fait que la portion de couplage est agencée de manière à ce que la lumière quittant cette portion de couplage se propage dans le guide de lumière autour de l'axe transversal suivant une ouverture angulaire totale, mesurée autour de cet axe transversal, strictement inférieure à 360°, notamment inférieure à 320° ou 300°.

## Description

L'invention concerne un dispositif optique, notamment pour véhicule automobile, tel qu'un dispositif d'éclairage ou de signalisation.

On connaît par la demande de brevet EP 1 881 263, du déposant, un dispositif d'éclairage ou de signalisation pour un véhicule automobile. Le dispositif d'éclairage est susceptible d'émettre un faisceau lumineux "F" selon un axe optique longitudinal "A".

Ce dispositif d'éclairage comporte au moins une nappe de guidage de la lumière, dont une partie au moins se présente sous la forme d'une portion de calotte sphérique.

La nappe de guidage est ainsi délimitée dans le sens de l'épaisseur, par deux faces de guidage sensiblement parallèles entre elles sur au moins une partie de la nappe.

La nappe de guidage est délimitée latéralement par une tranche avant de sortie des rayons lumineux et par une tranche arrière de réflexion de la lumière. Les extrémités de la tranche de réflexion sont directement raccordées aux extrémités de la tranche de sortie de manière à former le contour extérieur de la nappe de guidage.

Le contour de la tranche de sortie de la lumière forme un arc de cercle plan.

La nappe de guidage comporte un orifice d'entrée de la lumière dans la nappe.

Une source lumineuse est agencée dans l'orifice à proximité ou au contact de la tranche d'entrée des rayons lumineux.

La source lumineuse est susceptible d'émettre des rayons lumineux selon une direction globalement radiale autour d'un axe de source "S" qui est normal à la nappe de guidage. Plus précisément, la source lumineuse est susceptible d'émettre un éventail de rayons lumineux radialement au moins en direction de la tranche de réflexion.

La nappe de guidage est réalisée en un matériau transparent dont l'indice de réfraction est supérieur à l'indice de réfraction du milieu dans lequel le dispositif d'éclairage est destiné à être immergé, par exemple l'air. Ainsi, un rayon lumineux introduit dans l'épaisseur de la nappe par sa tranche d'entrée rencontre les faces de guidage supérieure ou inférieure avec un angle d'incidence par rapport à la normale "N" qui est supérieur à un angle limite de réfraction. Le rayon est alors susceptible d'être réfléchi totalement par les faces de guidage.

Le rayon lumineux est donc guidé dans l'épaisseur de la nappe de guidage par réflexions successives entre les deux faces de guidage.

Les rayons lumineux incidents qui partent vers l'arrière sont destinés à être réfléchis par la tranche de réflexion, puis les rayons lumineux ainsi réfléchis sont dirigés vers la tranche de sortie. Les rayons lumineux réfléchis sortent ainsi par la tranche de sortie.

La source lumineuse peut être une diode électroluminescente ou "LED" dite "Side-Emitter" qui émet des rayons lumineux dirigés sensiblement perpendiculairement à l'axe de source "S".

La source lumineuse peut également être constituée d'une lampe à incandescence, par exemple une lampe halogène, à filament axial, insérée dans le contour délimité par la tranche d'entrée. On pourra alors avantageusement prévoir dans ce cas qu'une zone de la nappe de guidage, au voisinage de la tranche d'entrée, soit réalisée en verre, alors que le reste de la nappe sera réalisée en matériau plastique surmoulé sur cette zone en verre. Une telle conception permet de s'affranchir des problèmes thermiques que pourrait générer l'utilisation d'une source à incandescence.

Cette demande de brevet EP 1 881 263 prévoit, dans un exemple de mise en oeuvre, que la LED de type Lambertienne est disposée dans un orifice débouchant seulement dans l'une des faces de guidage.

Cette LED est disposée de façon à ce que sa surface émittrice affleure la surface de la zone de couplage qui a été aménagée de manière à ce que les rayons lumineux émis par la LED soient ensuite redirigées radialement au niveau de la zone de couplage.

La zone de couplage présente localement une zone d'entrée sous forme d'une surface bombée convexe sur la face du côté duquel se trouve la LED et, sur la face opposée et en regard de cette face convexe, une zone s'approchant d'une forme complémentaire à celle d'un cône.

La zone de couplage présente une symétrie de révolution.

Ceci peut permettre d'obtenir des performances comparables au cas d'une LED de type 'Side-Emitter'.

Cependant l'efficacité d'un tel dispositif est réduite lorsque la face arrière n'entoure pas suffisamment la LED. C'est par exemple le cas lorsque les dimensions de la face arrière sont relativement faibles.

Dans ce dispositif connu, compte tenu de la forme de révolution de la zone de couplage par rapport à l'axe de LED, la lumière est uniformément répartie autour de l'axe de la LED dans la nappe.

La géométrie de la nappe et de la face arrière permet de distinguer plusieurs zones.

Il se présente d'abord une zone dans laquelle les rayons lumineux sont dirigés vers la face arrière et sont renvoyés proprement vers l'avant suivant l'axe optique.

Il se présente ensuite une zone correspondant aux rayons partant directement vers la face de sortie de la nappe et sortant de cette nappe suivant un angle qui leur permet de participer à la photométrie du faisceau.

Entre ces zones, les rayons lumineux sont soit définitivement perdus car ils sont réfléchis totalement par la face de sortie, soit réfractés par la face de sortie vers des angles excessivement importants qui ne leur permettent pas de participer à la photométrie du faisceau.

Ainsi le dispositif connu peut être sujet à des pertes de performances relativement importantes.

L'invention vise notamment à remédier aux inconvénients précités.

L'invention a ainsi pour objet un dispositif optique, notamment pour véhicule automobile, tel qu'un dispositif d'éclairage ou de signalisation, ce dispositif comportant au moins un guide de lumière agencé pour guider au moins une partie de la lumière émise par une source lumineuse, le guide de lumière comportant au moins une face de sortie et au moins une face de réflexion principale agencée pour réfléchir, vers la face de sortie, de la lumière se propageant dans le guide, le guide de lumière comportant une portion de couplage avec la source lumineuse, cette portion de couplage présentant un axe transversal, le dispositif étant caractérisé par le fait que la portion de couplage est agencée de manière à ce que la lumière quittant cette portion de couplage se propage dans le guide de lumière autour de l'axe transversal suivant une ouverture angulaire totale, mesurée autour de cet axe transversal, strictement inférieure à 360°, notamment inférieure à 320° ou 300°.

Autrement dit, selon l'invention, la somme totale des ouvertures angulaires des faisceaux quittant la zone de couplage est strictement inférieure à 360°, notamment inférieure à 320° ou 300°.

Grâce à l'invention, la portion de couplage du guide de lumière permet de diriger la lumière dans des directions choisies de telle sorte qu'il n'y ait pas ou peu de pertes photométriques.

Par exemple, contrairement au dispositif décrit dans la demande de brevet précitée EP 1 881 263 qui utilise une portion de couplage à symétrie de révolution qui renvoie la lumière provenant de la source lumineuse dans toutes les directions autour de l'axe de la source lumineuse, la présente invention permet de canaliser la lumière seulement dans les directions utiles pour la photométrie du faisceau de lumière quittant le guide de lumière.

La portion de couplage selon l'invention permet notamment d'éviter que certains rayons de lumière ne soient dirigés vers les zones de la face de sortie qui provoquent, de manière non souhaitée, une réflexion des rayons empêchant ceux-ci de quitter le guide de lumière ou une réfraction de ces rayons dans une direction inefficace pour les performances du faisceau de sortie.

L'invention est particulièrement avantageuse lorsque la ou les faces de réflexion arrières du guide de lumière n'entourent pas suffisamment la source lumineuse.

De plus l'invention permet une meilleure homogénéité d'une part car on évite une quantité excessive de lumière directe qui crée un point chaud lorsque le guide de lumière est vu sur les côtés et d'autre part car la lumière est accumulée au niveau de l'extrémité de la face de réflexion arrière, ce qui permet d'équilibrer davantage la quantité de lumière issue du bord de faces de réflexion arrières en comparaison de la quantité de lumière issue du fond.

En outre l'invention peut permettre d'éviter un défaut d'homogénéité du fait de la présence de la source lumineuse sur le trajet des rayons lumineux car les rayons réfléchis par des zones de la face de réflexion derrière la source lumineuse sont partiellement occultés par la portion de couplage.

Avantageusement la portion de couplage est agencée de manière à ce que la lumière quittant cette portion de couplage forme deux faisceaux lumineux, un premier des faisceaux se propageant dans le guide de lumière de manière à atteindre directement la face de sortie du guide de lumière, et un second des faisceaux se propageant dans le guide de lumière de manière à atteindre la face de réflexion principale, et les rayons du premier faisceau lumineux atteignent la face de sortie suivant un angle choisi de manière à ce que ces rayons puissent quitter le guide de lumière en se propageant en moyenne dans la direction de l'axe optique, et notamment ne se réfléchissent pas sur la face de sortie.

L'ouverture angulaire du premier faisceau, mesurée par exemple dans un plan perpendiculaire à l'axe transversal, est par exemple sensiblement inférieure ou égale à 20°, voire 15°.

Les rayons du premier faisceau peuvent être sensiblement parallèles entre eux.

Dans un exemple de mise en oeuvre de l'invention, les rayons du deuxième faisceau se propagent sensiblement radialement autour de l'axe transversal lorsqu'ils quittent la portion de couplage.

De préférence les premier et deuxième faisceaux, en quittant la portion de couplage, sont disjoints et sont par exemple séparés l'un de l'autre par des zones sombres.

De préférence, le premier faisceau, en quittant la portion de couplage, présente une ouverture angulaire plus faible que celle du deuxième faisceau, notamment au moins deux fois plus faible, par exemple dix fois plus faible.

Dans un exemple de mise en oeuvre de l'invention, la portion de couplage comporte une première facette de réflexion agencée pour renvoyer la lumière provenant de la source lumineuse directement, à savoir notamment sans réflexion sur la face de réflexion principale, vers la face de sortie du guide de lumière.

Cette première facette présente sensiblement une forme choisie notamment parmi : une portion de plan incliné (par exemple avec un angle voisin de 45° par rapport à l'axe transversal), un secteur de cylindre, un secteur de paraboloïde.

Le cas échéant, lorsque la première facette de réflexion de la portion de couplage présente une forme de secteur de cylindre, ce cylindre peut présenter un axe parallèle ou, en variante, perpendiculaire à l'axe transversal de la portion de couplage.

Avantageusement la portion de couplage comporte une deuxième facette de réflexion agencée pour renvoyer la lumière provenant de la source lumineuse vers la face de réflexion principale du guide de lumière, cette deuxième facette de réflexion présentant notamment, sur son étendue angulaire autour de l'axe transversal de la portion de couplage, une symétrie de révolution par rapport à cet axe transversal.

Par exemple la deuxième facette présente une forme choisie parmi : un secteur de cône, un secteur de paraboloïde.

Dans un exemple de mise en oeuvre de l'invention, les première et deuxième facettes de réflexion de la portion de couplage sont raccordées l'une à l'autre via au moins une marche contenue dans un plan lui-même contenant sensiblement l'axe transversal de la portion de couplage.

Avantageusement les première et deuxième facettes de réflexion de la portion de couplage sont raccordées l'une à l'autre via au moins une facette de transition, de préférence sensiblement tangente au moins à la deuxième facette de réflexion, et notamment agencée pour réfléchir la lumière vers la face de réflexion principale.

Cette facette de transition permet de diriger les rayons lumineux vers les limites extrêmes de la face de réflexion arrière puis ensuite progressivement vers le reste de la face arrière, plus près de la source lumineuse.

Par exemple la facette de transition est formée par une portion d'une surface de révolution.

Ce type de facette de transition est plus avantageux qu'une facette de transition en forme de marche car la forme de marche peut entraîner des difficultés de réalisation lors du moulage, ainsi que des pertes photométriques supplémentaires.

Dans un exemple de mise en oeuvre de l'invention, la portion de couplage présente une symétrie par rapport à un plan de symétrie contenant l'axe transversal de la portion de couplage.

La première facette de réflexion et/ou la facette de transition de la portion de couplage peuvent être bordées par au moins une facette de raccord optiquement neutre.

La facette de raccord peut présenter une forme en secteur de cône ou secteur de cylindre.

Dans un exemple de mise en oeuvre de l'invention, la source lumineuse est disposée au droit d'une cavité, de préférence non traversante, formée dans le guide de lumière.

En variante, la source lumineuse est disposée sensiblement à affleurement d'une surface extérieure du guide de lumière.

De préférence, la source lumineuse est agencée pour émettre un faisceau lumineux avec une composante sensiblement parallèle à l'axe transversal de la portion de couplage.

Si on le souhaite, la source lumineuse est disposée sur un sommet d'une portion sensiblement tronconique du guide de lumière.

Dans un exemple de mise en oeuvre de l'invention, le guide de lumière est réalisé d'un seul tenant, notamment par moulage, par exemple par moulage d'une matière plastique.

Le guide de lumière peut présenter une forme de nappe.

Avantageusement la source lumineuse comporte une LED.

L'invention pourra être mieux comprise à la lecture de la description détaillée qui va suivre, d'exemples de mise en oeuvre non limitatifs de l'invention, et à l'examen du dessin annexé, sur lequel :
- la figure 1 illustre, schématiquement et partiellement, en perspective, un dispositif optique selon un exemple de mise en oeuvre de l'invention,
- la figure 2 représente, schématiquement et partiellement, suivant une coupe transversale suivant II-II, le dispositif de la figure 1,
- la figure 3 illustre, schématiquement et partiellement, le trajet d'un rayon lumineux réfléchi sur la face de réflexion du guide de lumière du dispositif de la figure 1,
- les figures 4 et 5 représentent, schématiquement et partiellement, des portions de couplage conformes à deux exemples de mise en oeuvre de l'invention,
- la figure 6 illustre, schématiquement et partiellement, un dispositif optique conforme à un autre exemple de mise en oeuvre de l'invention,
- le figure 7 représente, schématiquement et partiellement, la portion de couplage du guide de lumière du dispositif de la figure 6,
- la figure 8 illustre schématiquement le trajet des rayons lumineux pour la portion de couplage de la figure 7, et
- la figure 9 et 10 représentent, schématiquement et partiellement, suivant deux vues différentes, une portion de couplage conforme à un autre exemple de mise en oeuvre de l'invention.

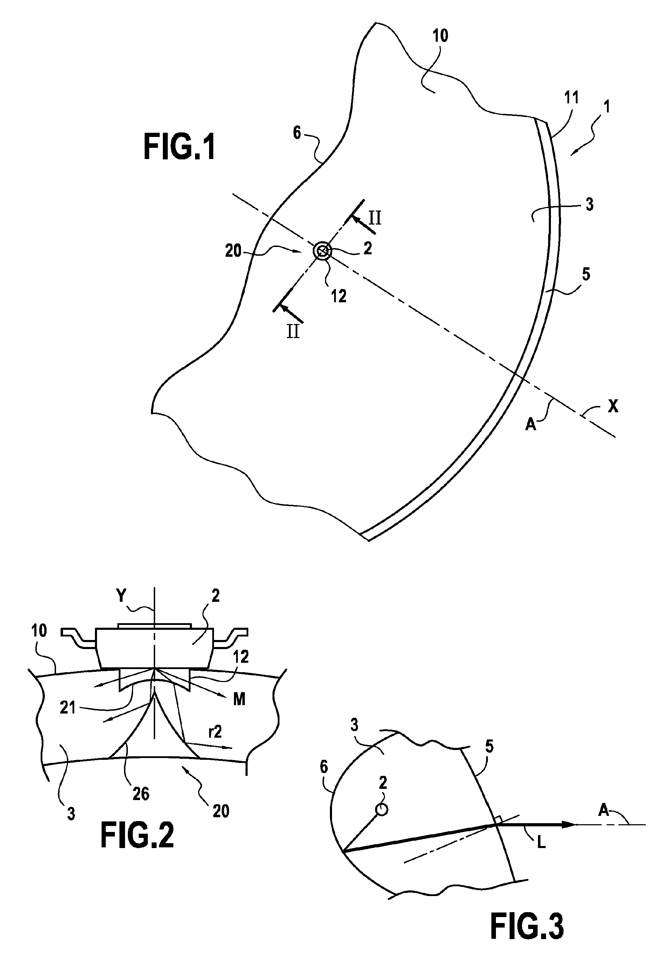

On a représenté sur les figures 1 à 3 un dispositif optique 1 pour véhicule automobile, tel qu'un dispositif d'éclairage ou de signalisation, comportant :
- une source lumineuse 2 formée par une LED de type Lambertienne ou à émission axiale,
- un guide de lumière 3 agencé pour guider la lumière émise par la source lumineuse 2, le guide de lumière 3 comportant au moins une face de sortie 5 et au moins une face de réflexion 6 agencée pour réfléchir, vers la face de sortie 5, de la lumière L se propageant dans le guide 3.

Le guide de lumière 3 présente une forme de nappe d'axe longitudinal X et présente deux faces principales 10 et 11, par exemple non planes, qui sont sensiblement parallèles entre elles.

L'épaisseur de ce guide de lumière 3 mesurée entre les deux faces principales 10 et 11 est par exemple comprise entre 3 mm et 5 mm.

La face de sortie 5 peut comporter des stries pour diffuser la lumière issue de cette face 5.

Dans l'exemple décrit, le guide de lumière 3 est monolithique, étant réalisé d'un seul tenant, par exemple par moulage d'une matière plastique d'indice de réfraction n.

La matière plastique utilisée peut par exemple être du PMMA d'indice de réfraction de 1.49 ou du PC d'indice de réfraction de 1.59.

La face de réflexion 6 peut comporter, au moins sur une portion de sa longueur, un aluminiage ou, en variante, celle-ci est agencée pour permettre une réflexion de la lumière se propageant dans le guide 3 par simple ou double réflexion totale.

Comme illustré sur la figure 2, le guide de lumière 3 comporte une cavité 12 d'entrée de la lumière.

Cette cavité 12, qui est non traversante, débouche sur la face principale 10 du guide de lumière 3.

La LED 2 émet dans un demi-espace et est disposée contre une portion de couplage 20 du guide lumière 3, au droit de la cavité 12.

Le fond 21 de la cavité 12 présente une forme convexe.

Comme illustré sur la figure 2, les rayons r1 pénètrent directement dans l'épaisseur de la portion de couplage 20.

D'autres rayons r2 sont d'abord réfractés par le fond convexe 21 de la cavité 12 puis réfléchis par la portion de couplage 20 dans le guide lumière 3.

Dans l'exemple décrit, le dispositif 1 est agencé pour émettre, par la face de sortie 5 du guide de lumière 3, une lumière d'intensité lumineuse comprise entre 50 candelas et 1000 candelas.

On va maintenant décrire plus en détail la portion de couplage 20.

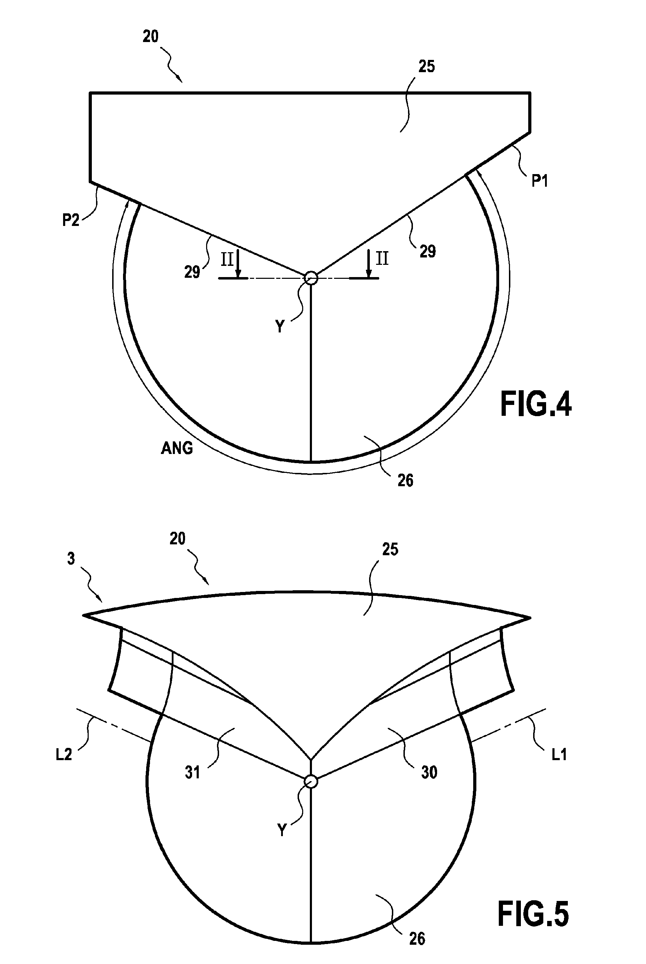

Comme illustré sur la figure 4, la portion de couplage 20 présente un axe transversal Y.

La portion de couplage 20 est agencée de manière à ce que la lumière quittant cette portion de couplage 20 se propage dans le guide de lumière 3 autour de l'axe transversal Y suivant une ouverture angulaire totale, mesurée autour de cet axe transversal Y, strictement inférieure à 360°, notamment inférieure à 320° ou 300°.

Cette portion de couplage 20 est agencée de manière à ce que la lumière quittant cette portion de couplage 20 forme deux faisceaux lumineux, un premier des faisceaux se propageant dans le guide de lumière 3 de manière à atteindre directement la face de sortie 5 du guide de lumière 3, et un second des faisceaux se propageant dans le guide de lumière 3 de manière à atteindre la face de réflexion arrière 6.

Les rayons du premier faisceau lumineux atteignent la face de sortie 5 suivant un angle choisi de manière à ce que ces rayons puissent quitter le guide de lumière et notamment ne se réfléchissent pas sur la face de sortie.

Les rayons qui sortent du guide sont réfractés dans des directions sensiblement parallèles à l'axe optique.

La portion de couplage 20 comporte une première facette de réflexion 25 agencée pour renvoyer la lumière provenant de la source lumineuse 2 directement, à savoir notamment sans réflexion sur la face de réflexion principale 6, vers la face de sortie 5 du guide de lumière 3.

Cette première facette 25 présente, dans l'exemple décrit, sensiblement une forme de portion de plan incliné par exemple avec un angle voisin de 45° par rapport à l'axe transversal Y.

La portion de couplage comporte également une deuxième facette de réflexion 26 agencée pour renvoyer la lumière provenant de la source lumineuse 2 vers la face de réflexion principale 6 du guide de lumière 3.

Cette deuxième facette de réflexion 26 présente, dans l'exemple décrit, sur son étendue angulaire ANG autour de l'axe transversal Y, une symétrie de révolution par rapport à cet axe transversal Y.

Par exemple la deuxième facette 26 présente une forme en secteur de cône obtenu en coupant un cône de révolution d'axe Y par deux plans P1 et P2 passant par l'axe Y.

Dans l'exemple de la figure 4, les première et deuxième facettes 25 et 26 de réflexion de la portion de couplage 20 sont raccordées l'une à l'autre via des marches 29 contenues respectivement dans l'un des plans P1 et P2.

En variante, la première facette de réflexion 25 de la portion de couplage 20 présente une forme de secteur de cylindre, ce cylindre peut présenter un axe parallèle ou, en variante, perpendiculaire à l'axe transversal Y de la portion de couplage 20.

Dans l'exemple de mise en oeuvre illustré à la figure 5, les première et deuxième facettes 25 et 26 de réflexion de la portion de couplage 20 sont raccordées l'une à l'autre via des facettes de transition 30 et 31, sensiblement tangentes à la deuxième facette de réflexion 26, et agencées pour réfléchir la lumière vers la face de réflexion arrière 6.

Par exemple chaque facette de transition 30 ; 31 est formée par une portion d'une surface de révolution, par exemple par un secteur de cylindre d'axe L1 ; L2.

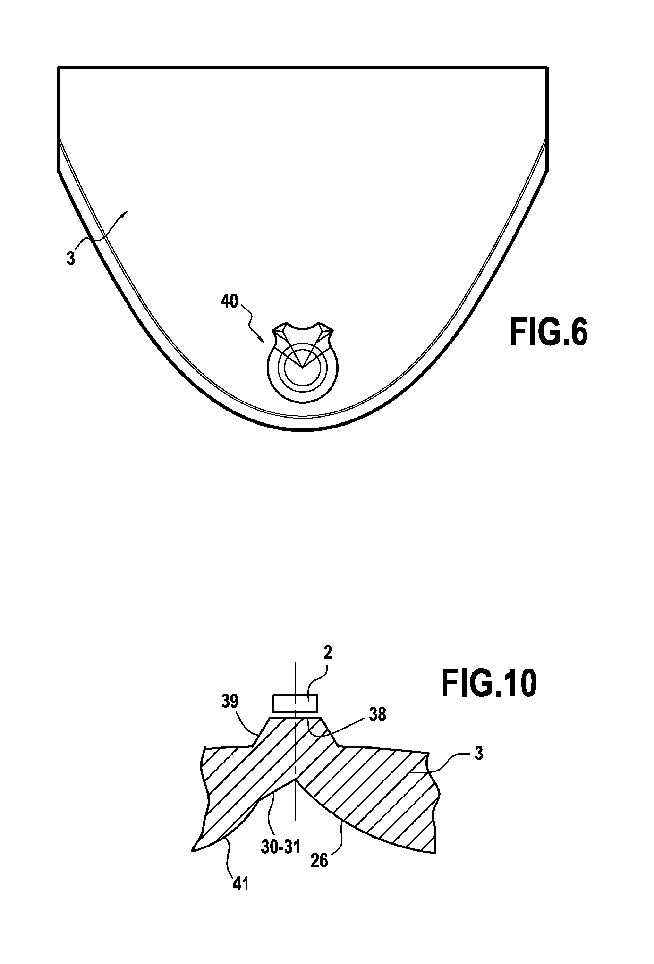

On a représenté sur les figures 6 à 8 une portion de couplage 40 selon un autre exemple de mise en oeuvre de l'invention.

Dans cet exemple, la face d'entrée de la lumière de la LED dans le guide est plane.

Cette portion de couplage 40 comporte outre la deuxième facette de réflexion 26 en secteur de cône à section parabolique, une première facette de réflexion 41 sensiblement en secteur de paraboloïde qui permet de concentrer de la lumière dans l'axe optique A, vers la face de sortie 5.

Cette facette 41 se raccorde à la facette 26 par des facettes de transition 30 et 31 à l'instar de ce qui a été décrit plus haut.

La première facette de réflexion 41 et les facettes de raccord 30 et 31 de la portion de couplage 40 sont bordées par des facettes de raccord 43 optiquement neutres, à savoir la lumière issue de la LED 2 n'atteint pas ces facettes de raccord 43.

Chaque facette de raccord 43 peut par exemple être formé par :
- une génératrice horizontale de type elliptique permettant de ramener les rayons vers la face de réflexion,
- un profil vertical parabolique garantissant que les rayons forment un angle relativement faible avec les faces supérieure et inférieure de la nappe.

La facette de raccord 43 peut en outre être définie comme une surface pour transformer l'onde sphérique issue de la source en une onde cylindrique qui se focalise sur un axe perpendiculaire à la nappe.

La portion de couplage 40 présente une symétrie par rapport à un plan de symétrie P contenant l'axe transversal Y de la portion de couplage.

En variante, la portion de couplage 40 peut être dissymétrique lorsque les faces arrières sont dissymétriques, notamment lorsque les dimensions des faces arrières sont dissymétriques.

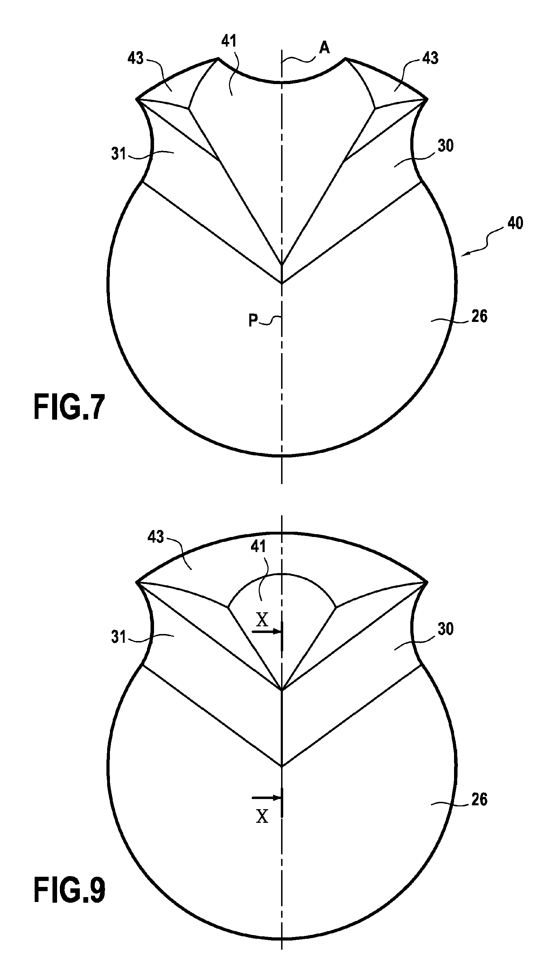

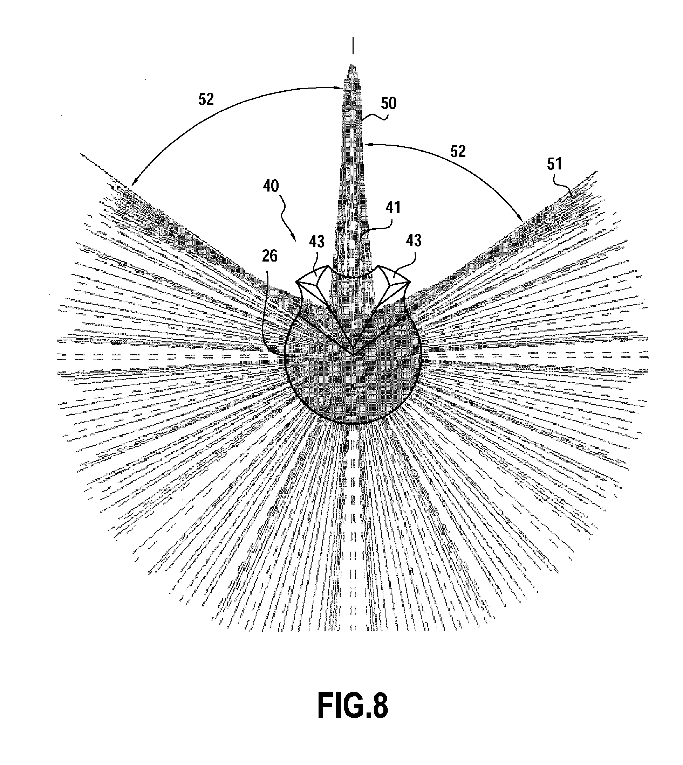

La figure 8 illustre le trajet des rayons lumineux obtenu par la portion de couplage 40 des figures 6 et 7.

L'ouverture angulaire du premier faisceau 50, mesurée par exemple dans un plan perpendiculaire à l'axe transversal Y, est par exemple sensiblement inférieure ou égale à 20°.

Le premier faisceau 50, en quittant la portion de couplage 40, présente une ouverture angulaire plus faible que celle du deuxième faisceau 51, notamment au moins deux fois plus faible, par exemple dix fois plus faible.

Dans l'exemple considéré, les rayons du deuxième faisceau 51 se propagent sensiblement radialement autour de l'axe transversal Y lorsqu'ils quittent la portion de couplage 40.

Les premier et deuxième faisceaux 50 et 51, en quittant la portion de couplage 40, sont disjoints et sont séparés l'un de l'autre par des zones sombres 52.

Dans un autre exemple illustré sur les figures 9 et 10, la portion de couplage 40 comporte une seule facette de raccord 43, au lieu de deux dans l'exemple de la figure 7.

Il s'agit d'une conséquence indirecte de la géométrie décrite dans les exemples des figures 9 et 10. La focale de la première zone 41 est ajustée de manière à modifier la surface couverte par la zone 41 en comparaison des zones de transition.

Dans l'exemple considéré, la LED 2 est disposée sur un sommet 38 d'une portion sensiblement tronconique 39 du guide de lumière 3, comme illustré sur la figure 10.

## Revendications

1. Dispositif optique (1), notamment pour véhicule automobile, tel qu'un dispositif d'éclairage ou de signalisation, ce dispositif comportant au moins un guide de lumière (3) agencé pour guider au moins une partie de la lumière émise par une source lumineuse (2), le guide de lumière comportant au moins une face de sortie (5) et au moins une face de réflexion principale (6) agencée pour réfléchir, vers la face de sortie, de la lumière se propageant dans le guide, le guide de lumière comportant une portion de couplage (20 ; 40) avec la source lumineuse, cette portion de couplage présentant un axe transversal (Y), le dispositif étant **caractérisé par le fait que** la portion de couplage est agencée de manière à ce que la lumière quittant cette portion de couplage se propage dans le guide de lumière autour de l'axe transversal suivant une ouverture angulaire totale, mesurée autour de cet axe transversal, strictement inférieure à 360°, notamment inférieure à 320° ou 300°.

2. Dispositif selon la revendication précédente, **caractérisé par le fait que** la portion de couplage (20 ; 40) est agencée de manière à ce que la lumière quittant cette portion de couplage forme deux faisceaux lumineux, un premier (50) des faisceaux se propageant dans le guide de lumière de manière à atteindre directement la face de sortie du guide de lumière, et un second (51) des faisceaux se propageant dans le guide de lumière de manière à atteindre la face de réflexion principale (6), et **par le fait que** les rayons du premier faisceau lumineux atteignent la face de sortie suivant un angle choisi de manière à ce que ces rayons puissent quitter le guide de lumière.

3. Dispositif selon la revendication précédente, **caractérisé par le fait que** l'ouverture angulaire du premier faisceau (50), mesurée par exemple dans un plan perpendiculaire à l'axe transversal (Y), est sensiblement inférieure ou égale à 20°.

4. Dispositif selon l'une des revendications précédentes, **caractérisé par le fait que** les rayons du deuxième faisceau se propagent sensiblement radialement autour de l'axe transversal (Y) lorsqu'ils quittent la portion de couplage (20 ; 40).

5. Dispositif selon l'une quelconque des revendications précédentes, **caractérisé par le fait que** la portion de couplage (20 ; 40) comporte une première facette de réflexion (25 ; 41) agencée pour renvoyer la lumière provenant de la source lumineuse directement vers la face de sortie (5) du guide de lumière, cette première facette présentant sensiblement une forme choisie notamment parmi : une portion de plan incliné, un secteur de cylindre, un secteur de paraboloïde.

6. Dispositif selon l'une quelconque des revendications précédentes, **caractérisé par le fait que** la portion de couplage comporte une deuxième facette de réflexion (26) agencée pour renvoyer la lumière provenant de la source lumineuse vers la face de réflexion principale (6) du guide de lumière, cette deuxième facette de réflexion présentant notamment, sur son étendue angulaire (ANG) autour de l'axe transversal de la portion de couplage, une symétrie de révolution par rapport à cet axe transversal (Y).

7. Dispositif selon la revendication précédente, **caractérisé par le fait que** la deuxième facette (26) présente une forme choisie parmi : un secteur de cône, un secteur de paraboloïde.

8. Dispositif selon l'une quelconque des revendications précédentes, **caractérisé par le fait que** les première et deuxième facettes de réflexion (25 ; 26) de la portion de couplage sont raccordées l'une à l'autre via au moins une facette de transition (30 ; 31), de préférence sensiblement tangente au moins à la deuxième facette (26) de réflexion, et notamment agencée pour réfléchir la lumière vers la face de réflexion principale.

9. Dispositif selon la revendication précédente, **caractérisé par le fait que** la facette de transition (30 ; 31) est formée par une portion d'une surface de révolution.

10. Dispositif selon l'une quelconque des revendications précédentes, **caractérisé par le fait que** la première facette de réflexion (41) de la portion de couplage est bordée par au moins une facette de raccord optiquement neutre (43).

11. Dispositif selon l'une des revendications précédentes, **caractérisé par le fait que** la source lumineuse (12) est disposée sur un sommet (38) d'une portion sensiblement tronconique (39) du guide de lumière.
